(19) Europäisches Patentamt
European Patent Office
Office européen des brevets

(11) EP 0 570 797 B1

(12) EUROPÄISCHE PATENTSCHRIFT

(45) Veröffentlichungstag und Bekanntmachung des Hinweises auf die Patenterteilung:
**14.01.1998 Patentblatt 1998/03**

(51) Int Cl.$^6$: **C08L 69/00**
// (C08L69/00, 69:00, 55:02, 25:02)

(21) Anmeldenummer: **93107558.4**

(22) Anmeldetag: **10.05.1993**

(54) **Polycarbonat-ABS-Formmassen**

Polycarbonate-ABS moulding compositions

Masses à mouler de polycarbonate et d'AB

(84) Benannte Vertragsstaaten:
**DE FR GB IT NL**

(30) Priorität: **21.05.1992 DE 4216758**

(43) Veröffentlichungstag der Anmeldung:
**24.11.1993 Patentblatt 1993/47**

(73) Patentinhaber: **BAYER AG**
**51368 Leverkusen (DE)**

(72) Erfinder:
- **Eckel, Thomas**
  **W-4047 Dormagen 1 (DE)**
- **Wittmann, Dieter**
  **W-5000 Köln 80 (DE)**
- **Fennhoff, Gerhard**
  **W-4156 Willich 2 (DE)**
- **Schoeps, Jochen**
  **W-4150 Krefeld (DE)**
- **Ott, Karl-Heinz**
  **W-5090 Leverkusen 1 (DE)**
- **Jakob, Wolfgang, Dipl.-Ing.**
  **W-4130 Moers (DE)**

(56) Entgegenhaltungen:
**EP-A- 0 000 186** **EP-A- 0 390 064**
**EP-A- 0 498 406** **DE-A- 4 014 308**
**FR-A- 2 388 011** **US-A- 3 166 606**

- **DATABASE WPI Week 8339, Derwent Publications Ltd., London, GB; AN 83-773236**
- **DATABASE WPI Week 8124, Derwent Publications Ltd., London, GB; AN 81-43185D**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 570 797 B1

## Beschreibung

Die vorliegende Erfindung betrifft thermoplastische Formmassen, die aus aromatischen Polycarbonaten, Vinylcopolymerisaten und Pfropfcopolymerisaten bestehen.

Thermoplastische Formmassen aus Polycarbonaten und ABS-Polymerisaten sind seit langem bekannt. So beschreibt beispielsweise DE-A 1 170 141 die gute Verarbeitbarkeit von Formmassen aus Polycarbonaten und Pfropfpolymerisaten von Monomermischungen aus Acrylnitril und einem aromatischen Vinylkohlenwasserstoff auf Polybutadien.

Es hat sich jedoch gezeigt, daß das Verarbeitungsverhalten von Polycarbonat-ABS-Formmassen für viele komplizierter aufgebaute und dünnwandige Teile nicht ausreichend ist.

Eine Verbesserung des Fließverhaltens von Polycarbonat-ABS-Formmassen kann z.B. durch bestimmte Zusätze (Fließhilfsmittel) oder durch Verwendung von Polycarbonat- und/oder Styrol-Acrylnitril-Harzen mit niedrigerem Molekulargewicht erreicht werden.

Dabei werden häufig andere wichtige Eigenschaften verschlechtert, beispielsweise die Wärmeformbeständigkeit bei der Zugabe niedermolekularer Fließhilfsmittel. Die stark abnehmende Zähigkeit der Formmassen, vor allem bei tiefen Temperaturen, ist der begrenzende Faktor bei der Reduzierung des Molekulargewichtes der Harzkomponenten.

Ziel der vorliegenden Erfindung war es, leichtfließende Polycarbonat-ABS-Formmassen herzustellen, bei denen keine Einbußen der übrigen Eigenschaften auftraten.

Es wurde nun überraschenderweise gefunden, daß bei Verwendung bestimmter Gemische von Polycarbonaten mit deutlich unterschiedlichen Lösungsviskositäten in Polycarbonat- ABS-Formmassen Fließeigenschaften resultieren, die besser sind, als es bei der Verwendung eines Typs mit durchschnittlicher Lösungsviskosität zu erwarten wäre. Dabei bleiben die mechanischen Eigenschaften wie Kerbschlagzähigkeit oder Vicat-Erweichungstemperatur auf unverändert hohem Niveau erhalten. Besonders vorteilhaft ist, daß bei der vorliegenden Erfindung als einer der beiden Polycarbonat-Bestandteile A.1 oder A.2 ein recycliertes Polycarbonat eingesetzt werden kann.

Gegenstand der vorliegenden Erfindung sind thermoplastische Formmassen enthaltend

A.
5 bis 95, vorzugsweise 10 bis 90, besonders bevorzugt 20 bis 80 Gew.-Teile eines aromatischen Polycarbonats,

B.
1 bis 50, vorzugsweise 2 bis 30, besonders bevorzugt 8 bis 25 Gew.-Teile eines Vinylcopolymerisates aus

B.1
50 bis 99 Gew.-Teilen Styrol, α-Methylstyrol, kernsubstituierten Styrolen, Methylmethacrylat oder Mischungen daraus, und

B.2
1 bis 50 Gew.-Teilen (Meth-)Acrylnitril, Methylmethacrylat, Maleinsäureanhydrid, N-Alkyl- oder N-Aryl-substituiertem Maleinimid oder Mischungen daraus,

und

C.
5 bis 95, vorzugsweise 7 bis 80, besonders bevorzugt 10 bis 70 Gew.-Teile eines oder mehrerer Pfropfpolymerisate, die erhalten werden durch Pfropfpolymerisation von

C.1
5 bis 95, vorzugsweise 30 bis 80 Gew.-Teile, einer Mischung aus

C.1.1
50 bis 99 Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus, und

C.1.2
1 bis 50 Gew.-Teilen Acrylnitril, Methacrylnitril, $C_1$-$C_8$-Alkylmethacrylaten, $C_1$-$C_8$-Alkylacrylaten, Maleinsäureanhydrid, $C_1$-$C_4$-alkyl- bzw. phenyl-N-substituierten Maleinimiden oder Mischungen daraus auf

C.2

5 bis 95, vorzugsweise 20 bis 70, Gew.-Teilen einer vernetzten, teilchenförmigen elastomeren Pfropfgrundlage mit einem durchschnittlichen Teilchendurchmesser ($d_{50}$-Wert) von 0,05 bis 5 µm, vorzugsweise 0,1 bis 0,6 µm und einer Glasübergangstemperatur <10°C, vorzugsweise <-10°C, wobei die Summe der Gew.-Teile A, B und C 100 Gew.-Teile beträgt,

dadurch gekennzeichnet,
daß die Komponente A zu 10 bis 100%, vorzugsweise zu 20 bis 70% durch ein Gemisch zweier Polycarbonate A.1 und A.2 mit identischer Struktur ersetzt wird, wobei

1) die relative Lösungsviskosität von A.1 1,18 bis 1,24 beträgt,
2) die relative Lösungsviskosität von A.2 1,24 bis 1,34 beträgt
und
3) die Differenz der relativen Lösungsviskositäten von A.1 und A.2 größer oder gleich 0,06 ist.

Komponente A

Bevorzugte Polycarbonate gemäß Komponente A sind solche auf Basis der Diphenole der Formel (I),

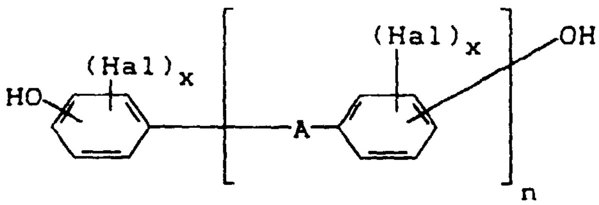

(I)

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-,

Hal Chlor oder Brom,

x 0, 1 oder 2 und

n 1 oder 0 sind.

Erfindungsgemäß geeignete Polycarbonate gemäß Komponente A sind sowohl Homopolycarbonate als auch Copolycarbonate.

Die Komponente A kann auch aus Mischungen der vorstehend definierten thermoplastischen Polycarbonate bestehen.

Die Herstellung der erfindungsgemäß geeigneten Polycarbonate gemäß Komponente A ist literaturbekannt und kann z.B. mit Phosgen nach dem Phasengrenzflächenverfahren oder mit Phosgen nach dem Verfahren in homogener Phase, dem sogenannten Pyridinverfahren, erfolgen, wobei das jeweils einzustellende Molekulargewicht in bekannter Weise durch eine entsprechende Menge an bekannten Kettenabbrechern erzielt wird.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 - 20 C-Atomen in den Alkylsubstituenten gemäß DE-OS 3 506 472, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethyl-heptyl)-phenol.

Die Menge an einzusetzenden Kettenabbrechern beträgt im allgemeinen zwischen 0,5 und 10 Mol-%, bezogen auf die Summe der jeweils eingesetzten Diphenole (I).

Die erfindungsgemäß geeigneten Polycarbonate gemäß Komponente A haben mittlere Gewichtsmittelmolekulargewichte ($\overline{M}w$, gemessen z.B. durch Ultrazentrifugation oder Streulichtmessung) von 10 000 bis 200 000, vorzugsweise von 20.000 bis 80 000.

Die relativen Lösungsviskositäten, gemessen in $CH_2Cl_2$ als Lösungsmittel bei 25°C bei einer Konzentration von 0,5 g/100 ml, der erfindungsgemäß geeigneten Polycarbonate bewegen sich üblicherweise im Bereich von 1,18 bis

1,34.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Polycarbonate gemäß Komponente A sind auch solche auf Basis der alkylsubstituierten Dihydroxydiphenylcycloalkanen der Formel (II),

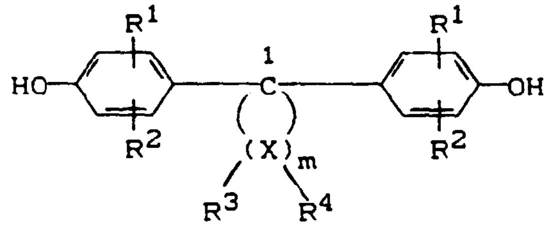

(II)

worin

$R^1$ und $R^2$ unabhängig voneinander Wasserstoff, Halogen, bevorzugt Chlor oder Brom, $C_1$-$C_8$-Alkyl, bevorzugt Methyl oder Ethyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl, vorzugsweise Wasserstoff, Methyl oder Ethyl,

und

X Kohlenwasserstoff bedeuten,
mit der Maßgabe, daß an mindestens einem Atom X $R^3$ und $R^4$ gleichzeitig Alkyl bedeuten.

Bevorzugte Diphenole der Formel (II) sind diphenylcycloalkane mit 5 und 6 Ring-C-Atomen im cycloaliphatischen Rest (m = 4 oder 5 in Formel (II) wie beispielsweise die Diphenole der Formeln

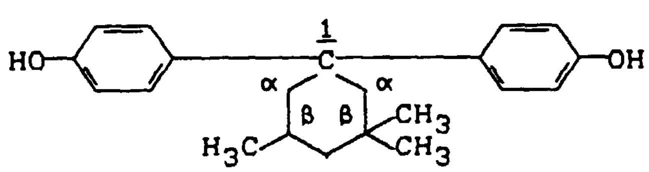

(IIa)

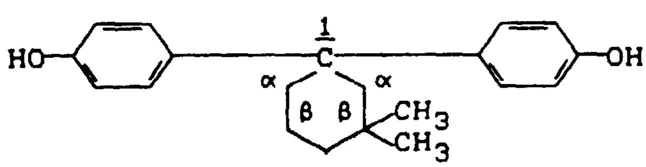

(IIb)

und

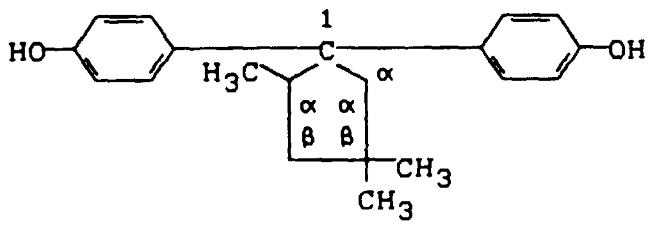

(IIc),

wobei das 1,1-Bis-(4-hydroxyphenyl)-3.3.5-trimethylcyclohexan (Formel IIa) besonders bevorzugt ist.

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen Gruppen, beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4"-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan.

Die aromatischen Polycarbonate der Komponente A können teilweise durch aromatische Polyestercarbonate ausgetauscht werden.

Erfindungsgemäß kann das aromatische Polycarbonat A zu 10 bis 100%, vorzugsweise zu 20 bis 70% durch ein Gemisch zweier Polycarbonate A.1 und A.2 mit identischer Struktur ersetzt werden. Vorzugsweise besitzen sowohl die Polycarbonate A.1 und A.2 als auch das Polycarbonat A identische Strukturen.

Bezogen auf das Gemisch der Polycarbonate A.1 und A.2 beträgt der Gewichtsanteil A.1 5 bis 95, vorzugsweise 25 bis 75 Gew.-%, insbesondere 10 bis 35 Gew.-%, und der Gewichtsanteil A.2 95 bis 5, vorzugsweise 75 bis 25 Gew.-%, insbesondere 35 bis 10 Gew.-%.

Das Gemisch der Polycarbonate A.1 und A.2 zeichnet sich dadurch aus, daß die relative Lösungsviskosität von A.1 1,18 bis 1,24 beträgt, daß die relative Lösungsviskosität von A.2 1,24 bis 1,34 beträgt und, daß die Differenz der relativen Lösungsviskositäten von A.1 und A.2 größer oder gleich 0,06, insbesondere größer oder gleich 0,09 ist, d.h. relative Lösungsviskosität (A.2) - relative Lösungsviskosität (A.1) $\geq$ 0,06, insbesondere $\geq$ 0,09. Die relative Lösungsviskosität wird gemessen in $CH_2Cl_2$ als Lösungsmittel bei 25°C bei einer Konzentration von 0,5 g/100 ml.

Eine besonders bevorzugte Ausführungsform dieser Erfindung wird erhalten, wenn mindestens einer der beiden Polycarbonat-Bestandteile A.1 oder A.2 im Gemisch ein recycliertes Polycarbonat ist. Unter recyclisiertem Polycarbonat werden solche Produkte verstanden, die bereits einen Verarbeitungs- und Lebenszyklus hinter sich haben und durch spezielle Aufarbeitungsverfahren von anhaftenden Verunreinigungen soweit befreit worden sind, so daß sie für weitere Anwendungen geeignet sind.

Komponente B

Das thermoplastische Polymer B umfasst Homopolymere oder Copolymere von einem oder mehreren ethylenisch ungesättigten Monomeren (Vinylmonomeren) wie beispielsweise Styrol, α-Methylstyrol, kernsubstituierte Styrole Acrylnitril, Methacrylnitril, Methylmethacrylat, Maleinsäureanhydrid, N-substituierte Maleinimide und (Meth-)Acrylsäureester

mit 1 bis 18 C-Atomen in der Alkoholkomponente.

Die Copolymerisate gemäß Komponente B sind harzartig, thermoplastisch und kautschukfrei.

Bevorzugte Vinyl-Copolymerisate B sind solche aus wenigstens einem Monomeren aus der Reihe Styrol, α-Methylstyrol und/oder kernsubstituiertem Styrol (B.1) mit wenigstens einem Monomeren aus der Reihe Acrylnitril, Methacrylnitril, Methylmethacrylat, Maleinsäureanhydrid und/oder N-substituiertem-Maleinimid (B.2).

Besonders bevorzugte Gewichtsverhältnisse im thermoplastischen Copolymerisat B sind 60 bis 95 Gew.-% B.1 und 40 bis 5 Gew.-% B.2.

Besonders bevorzugte Copolymerisate B sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte $\overline{M}_w$ (Gewichtsmittel, ermittelt durch Lichtstreuung oder Sedimentation) zwischen 15.000 und 200.000.

Besonders bevorzugte erfindungsgemäße Copolymerisate B sind auch statistisch aufgebaute Copolymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäure-anhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie α-Methylstyrol, enthalten.

Die Molekulargewichte (Zahlenmittel $\overline{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60.000 bis 200.000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

<u>Komponente C</u>

Die erfindungsgemäße Komponente C stellt Pfropfpolymerisate dar. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth-) Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Polymerisate C sind partiell vernetzt und besitzen Gel-gehalte von über 20 Gew.-%, vorzugsweise über 40 Gew.-%, insbesondere über 60 Gew.-%.

Bevorzugte Pfropfpolymerisate C umfassen Pfropfpolymerisate aus:

C.1 5 bis 95, vorzugsweise 30 bis 80, Gew.-Teile, einer Mischung aus

C.1.1 50 bis 99 Gew.-Teilen Styrol, α-Methylstyrol, halogen- oder methylkernsubstituierten Styrolen, Methylmethacrylat oder Mischungen dieser Verbindungen und

C.1.2 1 bis 50 Gew.-Teilen Acrylnitril, Methacrylnitril, Methylmethacrylat, Maleinsäureanhydrid, $C_1$-$C_4$-alkyl- bzw. phenyl-N-substituierten Maleinimiden oder Mischungen dieser Verbindungen auf

C.2 5 bis 95, vorzugsweise 20 bis 70, Gew.-Teilen Polymerisat auf Dien- und/oder Alkylacrylat-Basis mit einer Glasübergangstemperatur unter -10°C.

Bevorzugte Pfropfpolymerisate C sind z.B. mit Styrol und/oder Acrylnitril und/oder (Meth-)Acrylsäurealkylestern gepfropfte Grundlagen C.2 wie Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate C sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate C sind erhältlich durch Pfropfreaktion von

α. 10 bis 70, vorzugsweise 15 bis 50, insbesondere 20 bis 40, Gew.-%, bezogen auf Pfropfpolymerisat C, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35, Gew.-%; bezogen auf Gemisch, Acrylnitril oder (Meth-)Acrylsäureester und 50 bis 90, vorzugsweise 65 bis 80 Gew.-%, bezogen auf Gemisch, Styrol, als Pfropfauflage C.1 auf

β. 30 bis 90, vorzugsweise 50 bis 85, insbesondere 60 bis 80 Gew.-%, bezogen auf Pfropfpolymerisat C, eines Butadienpolymerisats mit mindestens 50 Gew.-%, bezogen auf β, Butadienresten als Pfropfgrundlage C.2,

wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser $d_{50}$ des Pfropfpolymerisats C.2 0,05 bis 2 µm, vorzugsweise 0,1 bis 0,6 µm beträgt.

(Meth-)Acrylsäureester α sind Ester der Acrylsäure oder Methacrylsäure und einwertiger Alkohole mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Propfpolymerisaten C auch solche Produkte verstanden, die durch Polymerisation der Pfropfmonomere in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew,-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind z.B. auch Pfropfpolymerisate aus

τ. 20 bis 90 Gew.-%, bezogen auf C, Acrylatkautschuk mit einer Glasübergangstemperatur unter -20°C als Pfropfgrundlage C.2 und

δ. 10 bis 80 Gew.-%, bezogen auf C, mindestens eines polymerisierbaren, ethylenisch ungesättigten Monomeren, dessen bzw. deren in Abwesenheit von C.2 entstandenen Homo- bzw. Copolymerisate eine Glasübergangstemperatur über 25°C hätten, als Pfropfmonomere C.1.

Die Acrylatkautschuke τ der Polymerisate C sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkyleser, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzten Monomere beträgt vorzugsweise 0,02 bis 5, insbesonder 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage τ sind Emulsionspolymerisate, die einen Gehalt von mindestens 60 Gew.-% aufweisen.

Weitere geeignete Pfropfgrundlagen gemäß C.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrundlage C.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropfpolymerisate C können nach bekannten Verfahren wie Masse-, Suspension, Emulsions- oder Masse-Suspensionsverfahren hergestellt werden.

Die erfindungsgemäßen Formmassen können darüber hinaus weitere bekannte Zusätze wie Stabilisatoren, Pigmente, Entformungsmittel, Fließhilfsmittel, Flammschutzmittel, Antistatika, Füll- und Verstärkungsstoffe in den üblichen Mengen enthalten.

Bevorzugte Additive im Sinne der Erfindung sind Flammschutzmittel. Dabei sind sowohl halogenhaltige wie Chlor- und/oder Bromverbindungen, als auch halogenfreie Verbindungen wie Phosphosverbindungen geeignet.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörper jeder Art z.B. durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Gegenstand der Erfindung ist ferner die Verwendung von recycliertem Polycarbonat in den obengenannten thermoplastischen Formmassen.

## Beispiele

### Komponente A

A

Lineares Polycarbonat auf Basis Bisphenol A mit einer relativen Lösungsviskosität von 1,2547, gemessen in $CH_2Cl_2$ als Lösungsmittel bei 25°C und in einer Konzentration von 0,5 g/100 ml.

A.1

Lineares Polycarbonat auf Basis Bisphenol A mit einer relativen Lösungsviskosität von 1,2095, gemessen in $CH_2Cl_2$ als Lösungsmittel bei 25°C und in einer Konzentration von 0,5 g/100 ml.

A.2.1

Lineares Polycarbonat auf Basis Bisphenol A mit einer relativen Lösungsviskosität von 1,3074, gemessen in $CH_2Cl_2$ als Lösungsmittel bei 25°C und in einer Konzentration von 0,5 g/100 ml.

A.2.2

Lineares Polycarbonat auf Basis Bisphenol A mit einer relativen Lösungsviskosität von 1,3254, gemessen in $CH_2Cl_2$ als Lösungsmittel bei 25°C und in einer Konzentration von 0,5 g/100 ml.

### Komponente B

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

### Komponente C

Pfropfpolymerisat von 45 Gew.-Teilen eines Copolymerisate aus Styrol und Acrylnitril im Verhältnis 72:28 auf 55 Gew.-Teile teilchenförmigen vernetzten Polybutadienkautschuk (mittlerer Teilchendurchmesser $d_{50}$=0,4 µm), hergestellt durch Emulsionspolymerisation.

Herstellung und Prüfung der erfindungsgemäßen Formmassen

Die Komponenten A, B und C wurden auf einem 3 l-Innenkneter bei Temperaturen zwischen 210 und 250°C aufgeschmolzen und homogenisiert.

Von den Formmassen wurden auf einer Spritzgußmaschine Stäbe der Abmessung 80 x 10 x 4 $mm^3$ (Verarbeitungstemperatur: 260°C) hergestellt, an denen die Kerbschlagzähigkeit (nach Methode ISO 180) bei Raumtemperatur gemessen wurde.

Die Bestimmung der Wärmeformbeständigkeit nach Vicat B erfolgte gemäß DIN 53 460.

Zur Beurteilung des Verarbeitungsverhaltens wurde an den Formmassen eine Viskositätsfunktion (Schmelviskosität in Abhängigkeit von der Schergeschwindigkeit) im Bereich von ca. 100 bis 1000 $s^{-1}$ bei einer Massetemperatur von 260°C aufgenommen, In der Tabelle angegeben sind die Werte für 100, 1000 und 1500 $s^{-1}$.

Eine Zusammenstellung der Eigenschaften der erfindungsgemäßen Formmassen findet sich in nachfolgender Tabelle.

Tabelle 1:

| Zusammensetzung und Eigenschaften der Polycarbonat-ABS-Formmassen | | | | | | |
|---|---|---|---|---|---|---|
| Beispiel | 1 Vergleich | 2 | 3 | 4 | 5 | 6 |
| Komponenten [Gew. -%] | | | | | | |
| A | 60 | 36 | 30 | 24 | 30 | -- |
| A.1 | -- | 12 | 15 | 18 | 15 | 30 |
| A.2.1 | -- | -- | -- | -- | 15 | 30 |
| A.2.2 | -- | 12 | 15 | 18 | -- | -- |
| B | 16 | 16 | 16 | 16 | 16 | 16 |
| C | 24 | 24 | 24 | 24 | 24 | 24 |
| Eigenschaften: | | | | | | |
| Vicat/$B_{120}$ [°C] | 118 | 119 | 118 | 119 | 120 | 118 |
| Kerbschlagzähigkeit [kJ/$m^2$] | 47 | 46 | 47 | 47 | 46 | 46 |
| Schmelzviskosität bei 260°C [Pa·s] | | | | | | |
| bei 100 s-1 | 950 | 780 | 820 | 825 | 720 | 690 |
| bei 1000 s-1 | 285 | 265 | 265 | 270 | 245 | 245 |
| bei 1500 s-1 | 220 | 200 | 205 | 210 | 190 | 190 |

Aus Tabelle 1 wird deutlich, daß die erfindungsgemäßen Beispiele 2-6 eine optimate Eigenschaftskombination aus hoher Wärmeformbeständigkeit, guter Kerbschlagzähigkeit und gegenüber dem Vergleichsbeispiel 1 wesentlich verbessertem Fließverhalten bieten.

**Patentansprüche**

**1.** Thermoplastische Formmassen enthaltend

A.
5 bis 95 Gew.-Teile eines aromatischen Polycarbonats

B
1 bis 50 Gew.-Teile eines Vinylcopolymerisates aus

B.1
50 bis 99 Gew.-Teilen Styrol, α-Methylstyrol, kernsubstituierten Styrolen, Methylmethacrylat oder Mischungen daraus, und

B.2
1 bis 50 Gew.-Teilen (Meth-)Acrylnitril, Methylmethacrylat, Maleinsäureanhydrid, N-Alkyl- oder N-Aryl-substituiertem Maleinimid oder Mischungen daraus,

und

C.
5 bis 95 Gew.-Teile eines oder mehrerer Pfropfpolymerisate, die erhalten werden durch Pfropfpolymerisation von

C.1
5 bis 95 Gew.-Teile einer Mischung aus

C.1.1
50 bis 99 Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus, und

C.1.2
1 bis 50 Gew.-Teilen Acrylnitril, Methacrylnitril, $C_1$-$C_8$-Alkylmethacrylaten, $C_1$-$C_8$-Alkylacrylaten, Maleinsäureanhydrid, $C_1$-$C_4$-alkyl- bzw. phenyl-N-substituierten Maleinimiden oder Mischungen daraus auf

C.2
5 bis 95 Gew.-Teilen einer vernetzten, teilchenförmigen elastomeren Pfropfgrundlage mit einem durchschnittlichen Teilchendurchmesser ($d_{50}$-Wert) von 0,05 bis 5 µm und einer Glasübergangstemperatur <10°C, wobei die Summe der Gew.-Teile A, B und C 100 Gew.-Teile beträgt,

dadurch gekennzeichnet,
daß die Komponente A zu 10 bis 100% durch ein Gemisch zweier Polycarbonate A.1 und A.2 mit identischer Struktur ersetzt wird, wobei

1) die relative Lösungsviskosität von A.1 1,18 bis 1,24 beträgt,

2) die relative Lösungsviskosität von A.2 1,24 bis 1,34 beträgt und

3) die Differenz der relativen Lösungsviskositäten von A.1 und A.2 größer oder gleich 0,06 ist.

2. Formassen gemäß Anspruch 1, enthaltend 10 bis 90 Gew.-Teile der Komponente A, 2 bis 30 Gew.-Teile der Komponente B und 7 bis 80 Gew.-Teile der Komponente C.

3. Formmassen gemäß Anspruch 1, enthaltend 20 bis 80 Gew.-Teile der Komponente A, 8 bis 25 Gew.-Teile der Komponente B und 10 bis 70 Gew.-Teile der Komponente C.

4. Formmassen gemäß Anspruch 1, dadurch gekennzeichnet, daß die Komponente A zu 20 bis 70% durch ein Gemisch zweier Polycarbonate A.1 und A.2 mit identischer Struktur ersetzt wird.

5. Formmassen gemäß Anspruch 1, enthaltend als Pfropfgrundlage C.2 einen Dienkautschuk, Acrylatkautschuk, Silikonkautschuk oder Ethylen-Propylen-Dien-Kautschuk.

6. Thermoplastische Formmassen gemäß Anspruch 1, wobei mindestens einer der beiden Polycarbonat-Bestandteile A.1 oder A.2 im Gemisch ein recycliertes Polycarbonat ist.

7. Formmassen gemäß Anspruch 1, dadurch gekennzeichnet, daß sie mindestens einen Zusatz aus der Gruppe der Stabilisatoren, Pigmente, Entformungsmittel, Fließhilfsmittel, Flammschutzmittel, Antistatika, Füll- und Verstärkungsstoffe enthalten.

8. Verfahren zur Herstellung der Formmassen gemäß Anspruch 1, dadurch gekennzeichnet, daß man die Komponenten A, B und C sowie gegebenenfalls mindestens einen weiteren Bestandteil ausgewählt aus der Gruppe der Stabilisatoren, Pigmente, Entformungsmittel, Fließhilfsmittel, Flammschutzmittel, Antistatika, Füll- und Verstärkungsstoffe vermischt und bei erhöhten Temperaturen schmelzcompoundiert oder schmelzextrudiert.

**9.** Verwendung der Formmassen gemäß Anspruch 1 zur Herstellung von Förmkörpern.

**10.** Verwendung eines Gemisches zweier Polycarbonate A.1 und A.2 gemäß Anspruch 1 als Ersatz von 10 bis 100 % aromatischem Polycarbonat in Formmassen aus aromatischem Polycarbonat A, Vinylcopolymerisat B und Pfropfpolymerisat C.

**Claims**

**1.** Thermoplastic moulding compositions containing

A.
5 to 95 parts by weight of an aromatic polycarbonate

B.
1 to 50 parts by weight of a vinyl copolymer formed from

B.1
50 to 99 parts by weight styrene, α-methylstyrene, ring-substituted styrenes, methyl methacrylate or mixtures thereof, and

B.2
1 to 50 parts by weight (meth)acrylonitrile, methyl methacrylate, maleic anhydride, N-alkyl-substituted or N-aryl-substituted maleimide or mixtures thereof,

and

C.
5 to 95 parts by weight of one or more graft polymers obtained by graft polymerisation of

C.1
5 to 95 parts by weight of a mixture of

C.1.1
50 to 99 parts by weight styrene, α-methylstyrene, ring-substituted styrenes, $C_{1-8}$ alkyl methacrylates, $C_{1-8}$ alkyl acrylates or mixtures thereof, and

C.1.2
1 to 50 parts by weight acrylonitrile, methacrylonitrile, $C_{1-8}$ alkyl methacrylates, $C_{1-8}$ alkyl acrylates, maleic anhydride, $C_{1-4}$ alkyl-substituted maleimides or phenyl-N-substituted maleimides or mixtures thereof on

C.2
5 to 95 parts by weight of a crosslinked, particulate elastomeric graft base having an average particle diameter ($d_{50}$ value) of 0.05 to 5 μm and a glass transition temperature of < 10°C, the sum of the parts by weight of A, B, and C amounting to 100 parts by weight,

characterised in that
10 to 100 % of component A is replaced by a mixture of two polycarbonates A.1 and A.2 of identical structure, whereby

1) the relative solution viscosity of A.1 amounts to between 1.18 and 1.24,

2) the relative solution viscosity of A.2 amounts to between 1.24 and 1.34, and

3) the difference between the relative solution viscosities of A.1 and A.2 is greater than or equal to 0.06.

**2.** Moulding compositions according to Claim 1, containing 10 to 90 parts by weight of component A, 2 to 30 parts by weight of component B and 7 to 80 parts by weight of component C.

**3.** Moulding compositions according to Claim 1, containing 20 to 80 parts by weight of component A, 8 to 25 parts by weight of component B and 10 to 70 parts by weight of component C.

**4.** Moulding compositions according to Claim 1, characterised in that 20 to 70 % of component A is replaced by a mixture of two polycarbonates A.1 and A.2 of identical structure.

**5.** Moulding compositions according to Claim 1, containing by way of graft base C.2 a diene rubber, an acrylate rubber, a silicone rubber or an ethylene/propylene/ diene rubber.

**6.** Thermoplastic moulding compositions according to Claim 1, wherein at least one of the two polycarbonate constituents A.1 or A.2 in the mixture is a recycled polycarbonate.

**7.** Moulding compositions according to Claim 1, characterised in that they contain at least one additive from the group comprising stabilisers, pigments, mould-release agents, flow aids, flameproofing agents, antistatic agents, fillers and reinforcing materials.

**8.** Process for the production of the moulding compositions according to Claim 1, characterised in that components A, B and C and also, optionally, at least one other constituent selected from the group comprising stabilisers, pigments, mould-release agents, flow aids, flameproofing agents, antistatic agents, fillers and reinforcing materials are blended and then melt-compounded or melt-extruded at elevated temperatures.

**9.** Use of the moulding compositions according to Claim 1 for the production of moulded articles.

**10.** Use of a mixture of two polycarbonates A.1 and A.2 according to Claim 1 by way of replacement for 10 to 100 % aromatic polycarbonate in moulding compositions consisting of aromatic polycarbonate A, vinyl copolymer B and graft polymer C.

**Revendications**

**1.** Matières à mouler thermoplastiques contenant

A.
5 à 95 parties en poids d'un polycarbonate aromatique,
B.
1 à 50 parties en poids d'un copolymère vinylique de
B.1
50 à 99 parties en poids de styrène, d'$\alpha$-méthylstyrène, de styrènes substitués dans le noyau, de méthacrylate de méthyle ou leurs mélanges, et
B.2
1 à 50 parties en poids de (méth)acrylonitrile, de méthacrylate de méthyle, d'anhydride maléique, d'un maléimide substitué à l'azote par un groupe alkyle ou aryle ou leurs mélanges,

et

C.
5 à 95 parties en poids d'un ou plusieurs polymères greffés obtenus par polymérisation greffée de
C.1
5 à 95 parties en poids d'un mélange de
C.1.1
50 à 99 parties en poids de styrène, d'$\alpha$-méthylstyrène, de styrènes substitués dans le noyau, de méthacrylates d'alkyle en $C_1$-$C_8$, d'acrylates d'alkyle en $C_1$-$C_8$ ou leurs mélanges, et
C.1.2
1 à 50 parties en poids d'acrylonitrile, de méthacrylonitrile, de méthacrylates d'alkyles en $C_1$-$C_8$, d'acrylates d'alkyles en $C_1$-$C_8$, d'anhydride maléique, de maléimides substitués à l'azote par un groupe alkyle en $C_1$-$C_4$ ou phényle, ou leurs mélanges, sur
C.2
5 à 95 parties en poids d'un support de greffage élastomère réticulé à l'état de particules à un diamètre moyen

($d_{50}$) de 0,05 à 5µm et une température de transition du second ordre inférieure à 10°C, la somme des parties en poids de A, B et C représentant 100 parties en poids,

caractérisées en ce que le composant A est remplacé en proportions de 10 à 100 % par un mélange de deux polycarbonates A.1 et A.2, à structure identique,
mais

1) à une viscosité relative en solution de 1,18 à 1,24 pour A.1,
2) à une viscosité relative en solution de 1,24 à 1,34 pour A.2,
et
3) avec une différence des viscosités relatives en solution de A.1 et A.2 qui est supérieure ou égale à 0,06.

**2.** Matières à mouler selon la revendication 1, contenant 10 à 90 parties en poids du composant A, 2 à 30 parties en poids du composant B et 7 à 80 parties en poids du composant C.

**3.** Matières à mouler selon la revendication 1, contenant 20 à 80 parties en poids du composant A, 8 à 25 parties en poids du composant B et 10 à 70 parties en poids du composant C.

**4.** Matières à mouler selon la revendication 1, caractérisées en ce que le composant A est remplacé en proportions de 20 à 70 % par un mélange de deux polycarbonates A.1 et A.2 à structure identique.

**5.** Matières à mouler selon la revendication 1 contenant, en tant que support de greffage C.2, un caoutchouc diénique, un caoutchouc d'acrylates, un caoutchouc de silicone ou un caoutchouc d'éthylène-propylène-diène.

**6.** Matières à mouler thermoplastiques selon la revendication 1, dans lesquelles au moins un des deux polycarbonates constituants A.1 ou A.2, est mélangé avec un polycarbonate recyclé.

**7.** Matières à mouler selon la revendication 1, caractérisées en ce qu'elles contiennent au moins un additif pris dans le groupe des stabilisants, des pigments, des agents de démoulage, des produits auxiliaires fluidifiants, des agents ignifugeants, des agents antistatiques, des matières de charge et matières renforçantes.

**8.** Procédé de préparation des matières à mouler selon la revendication 1, caractérisé en ce que l'on mélange les composants A, B et C et le cas échéant au moins un autre constituant choisi dans le groupe des stabilisants, des pigments, des agents de démoulage, des produits auxiliaires fluidifiants, des agents ignifugeants, des agents antistatiques, des matières de charge et matières renforçantes et on homogénéise à température élevée par mélange à l'état fondu ou extrusion à l'état fondu.

**9.** Utilisation des matières à mouler selon la revendication 1 pour la fabrication d'objets moulés.

**10.** Utilisation d'un mélange de deux polycarbonates A.1 et A.2 selon la revendication 1 en remplacement de 10 à 100 % d'un polycarbonate aromatique dans des matières à mouler consistant en un polycarbonate aromatique A, un copolymère vinylique B et un polymère greffé C.